# EUROPEAN PATENT APPLICATION

(11) **EP 4 752 098 A1**
(43) Date of publication of application: **03.06.2026**
(21) Application number: 25215032.1
(22) Date of filing: 11.11.2025
(51) Int. Cl.: B66D 1/22, B66D 1/74

(54) **WINCH SYSTEM FOR SAILING VESSELS**

(30) Priority: 29.11.2024 IT 202400027138
(71) Applicant: Antal S.r.l., 35127 Padova Padova (IT)
(72) Inventor: MOTTIN, Matteo, 36050 QUINTO VICENTINO (VI) (IT); COGO, Andrea, 35036 MONTEGROTTO TERME (PD) (IT)
(74) Representative: Milan, Guglielmo

(57) **Abstract**

A winch system (1) for sailing vessels comprises a winch (2) and a transmission (3) for actuating a drum (4) of the winch. The transmission comprises at least a first planetary gear (5) including a first sun shaft (6), a first planet carrier (7) and a first ring (8). The first planetary gear (5) is switchable between two selectable transmission ratios, via which a rotation of the first sun shaft (6) can be transferred to the drum (4) as a function of the transmission ratio selected. The transmission (3) comprises a clutch (9) which is configured to connect the first sun shaft (6) to the first ring (8) and a brake (10) which is configured to connect the first ring (8) to a casing (11) of the transmission. The two transmission ratios are selectable as a function of the activation of the clutch (9) or the brake (10) and a resultant connection of the first ring (8) to the first sun shaft (6) or the casing (11), respectively.

## Description

The present invention relates to a winch system for sailing vessels.

As is known, winches are essential components for managing the ropes that regulate the sails during navigation manoeuvres. These devices must meet high requirements in terms of robustness, reliability and versatility, as they are used in conditions of variable load and in harsh environments such as the marine one. An effective winch system must ensure rapid adaptability between different operational modes, depending on the load and navigation conditions, without compromising the safety and precision of the manoeuvres.

Currently, the state of the art includes winch systems that allow managing the ropes with variable-ratio gearboxes. In particular, patent application DE102008044009A1 describes a device for managing ropes on sailing vessels that uses a planetary gearbox with two selectable transmission ratios: slow and fast. This system allows the passage to the faster ratio even under load by means of an axially movable sleeve, ensuring a certain operational flexibility in sailing manoeuvres.

However, a significant limitation of the system described in DE102008044009A1 is represented by the impossibility of changing from a fast to a slower ratio under load, due to the inherent limitations of the planetary gearbox used. The need to reduce the load in order to return to the slow ratio represents an obstacle in situations where uninterrupted speed variation is required, for example during critical manoeuvres. This feature limits the continued use of the winch under high load conditions, reducing the versatility of the system and potentially increasing operational risk.

In addition, the aforesaid system does not provide for the possibility of completely immobilizing the winch, which always remains free to rotate as a function of the transmission ratio selected and the rotation of the drive train, representing a potential operational limit in situations that require a complete stop of the winch.

A further drawback of the current systems is that, although effective, they require considerable power from the motorization in order to manage the ratio variations under load, which translates into a high energy expenditure and greater wear of the components. The reduced energy efficiency represents a further limit for applications where a prolonged and reliable operation of the winch with reduced energy consumption, particularly important in sailing vessels where energy storage capacity is often limited, is required.

Therefore, the problem underlying the present invention is that of making available a winch system for sailing vessels which is structurally and functionally designed to remedy at least in part one or more of the drawbacks complained of with reference to the known prior art.

Within the scope of this problem, the present invention aims to make available a winch system that allows a wider operating range than the conventional gearboxes.

A further object of the present invention is to make available a winch system that reduces the power required for the motorization.

An object of the present invention is also to make available a winch system that improves the known solutions within a simple, rational and cost-effective solution.

This problem is solved and these objects are achieved, at least in part, by the invention in a first aspect by means of a winch system for sailing vessels, comprising a winch and a transmission for actuating a drum of the winch. Preferably the transmission comprises at least a first planetary gear including a first sun shaft, a first planet carrier and a first ring. Preferably the first planetary gear is switchable between two selectable transmission ratios, via which a rotation of the first sun shaft can be transferred to the drum as a function of the transmission ratio selected. Preferably the transmission comprises a clutch which is configured to connect the first sun shaft to the first ring. Preferably the transmission comprises a brake which is configured to connect the first ring to a casing of the transmission. Preferably the two transmission ratios are selectable as a function of the activation of the clutch or the brake and a resultant connection of the first ring to the first sun shaft or the casing, respectively.

This solution has important technical advantages over traditional winch systems used for sailing vessels, thanks to the use of a clutch that connects the first sun shaft to the first ring and a brake that connects the first ring to the casing. In particular, the selective activation of the clutch or brake, or both simultaneously, allows the operating conditions of the system to be changed continuously, and even under load, as illustrated below.

When the clutch is disengaged and the brake is engaged, the first planetary gear transmits the rotation from the first sun shaft to the first planet carrier with a first transmission ratio, in particular a reduction ratio. When the clutch is engaged and the brake is disengaged, the first planetary gear transmits the rotation from the first sun shaft to the first planet carrier with a second transmission ratio, in particular a direct 1:1 ratio. In this way, the selective activation of the brake or clutch allows to pass from a slow ratio to a fast ratio or from a fast ratio to a slow ratio, seamlessly. This solution allows a more effective management of the ropes under load, optimising the performance of the winch and expanding the operational possibilities, even under critical manoeuvring conditions.

Furthermore, when the clutch and brake are both active (clutch engaged and brake engaged), the rotation of the first planetary gear is blocked: in this way it is possible to stop the rotation of the drum of the winch, further improving the versatility of the system and operational safety.

A further advantage that derives from the use of the clutch and brake in the architecture of the aforesaid transmission is the possibility of transmitting motion in both directions of rotation, without limitations to a single direction as is the case in geometric connections: this aspect increases the flexibility of use in applications that require a reversible winch, that is, which can be operated in both directions of rotation.

In addition, the architecture of the transmission is particularly advantageous for the systems where the encumbrance needs to be limited, such as in the case of sailing vessels, where the space available for the winches is often limited. The configuration described makes it possible to keep the system compact while offering an effective and high-performance transmission.

In addition, the architecture of the transmission is particularly suitable for receiving a motorised drive: the use of a motor allows a faster and more precise adjustment of the sails, improving the efficiency of the manoeuvres, especially under variable wind conditions or during races.

In summary, the proposed solution offers an advanced winch system for sailing vessels, characterized by more efficient power transmission, a wider operating range, better compactness and safer and more effective operational control, all advantages particularly useful in marine applications where versatility and reliability are crucial.

It should be noted that, in this context, "clutch" preferably means a device which, when active, uses a friction coupling to transmit or modulate the transfer of movement between the first sun shaft and the first ring. Similarly, "brake" preferably means a device which, when active, uses a friction coupling to reduce or stop the movement of the first ring with respect to the casing.

In a second aspect the invention relates to a winch system for sailing vessels, comprising a winch and a transmission for actuating a drum of the winch. Preferably, the transmission comprises a first and a second planetary gear. Preferably the first planetary gear comprises a first sun shaft, a first planet carrier and a first ring. Preferably the second planetary gear comprises a second sun shaft, a second planet carrier and a second ring. Preferably the first ring is connected to a casing of the transmission. Preferably the second planet carrier is connected to a base of the winch. Preferably the second sun shaft is connected to the first planet carrier. Preferably the drum is connected to the second ring. In this way, advantageously, a rotation of the first sun shaft results in a rotation of the drum.

This solution has important technical advantages over the traditional winch systems used for sailing vessels, thanks to the use of a transmission with double planetary gear. In particular, the use of two planetary gears in series allows to transmit power from the first sun shaft up to the drum of the winch with greater efficiency than solutions with single gearboxes or with more complex mechanical transmissions. This leads to a reduction in power losses, allowing a more effective use of the energy applied and a consequent reduction in the power required by the motorisation.

In addition, the double-gear configuration allows the load to be distributed over multiple components (in particular on the planets and rings), reducing wear and prolonging the useful lifespan of the system. This leads to a greater reliability of the system and less need for maintenance.

Moreover, thanks to the presence of two planetary gears, a very high reduction ratio can be achieved in a relatively compact space, which is ideal for space constraints on board a vessel. This reduction ratio allows to precisely control the speed and force applied to the drum, facilitating sail tensioning operations even under high load conditions.

In addition thereto, the double-planetary gear configuration can help reduce vibrations and noise compared to other transmission systems. This is due to the balanced load distribution between the different rotating components, which makes the system more stable and quieter during operation.

In addition, the system allows a precise control of the drum thanks to the direct connection between the first sun shaft and the drum through the double planetary gear. This allows the operator to precisely adjust the position of the sail, improving the manoeuvring capabilities of the vessel.

In addition, the configuration described, which connects the first ring and the second planet carrier to fixed parts (casing of the transmission and base of the winch), gives greater stability to the system, reducing the risk of malfunctions. The present invention in at least one of the aforesaid aspects may also have one or more of the following preferred features in addition to those previously mentioned.

Preferably the clutch is configured to, when activated, bring about a friction coupling between the first sun shaft and the first ring. Preferably the brake is configured to, when activated, bring about a friction coupling between the first ring and the casing. Advantageously, the friction coupling allows the transmission ratio to be varied continuously even under load, guaranteeing a smooth transition without motion interruptions. This results in a more efficient and versatile system.

A further advantage of the friction coupling is the possibility of transmitting motion in both directions of rotation, without limitations to a single direction as is the case with geometric connections: this aspect increases the flexibility of use in applications that require a reversible winch.

Furthermore, the friction coupling reduces the mechanical shocks and allows a progressive adjustment, preserving the integrity of the components and the life of the entire transmission.

Preferably, the clutch and the brake can be activated simultaneously in order to stop the rotation of the drum. This solution further improves the versatility of the system and the operational safety.

Preferably the first planetary gear has a central rotation axis. Preferably the clutch comprises a clutch disk which is mounted axially around the first sun shaft. Preferably the brake comprises a braking disk which is mounted axially around a central shaft of the first planet carrier. Preferably the clutch disk is axially movable between a connection position and a disconnection position of the first sun shaft with respect to the first ring. Preferably the braking disk is axially movable between a connection position and a disconnection position of the first ring with respect to the casing. The configuration described makes it possible to keep the system compact while offering a precise and high-performance variable-ratio transmission.

Preferably, the clutch and the brake comprise resilient means which are configured to urge the disks into the respective connection position. Preferably the clutch and the brake comprise actuation means, in particular with electromagnet, which are configured to, when activated, selectively move the clutch disk or the braking disk into the respective disconnection position counter to the urging of the resilient means. These characteristics make it possible to obtain a clutch and brake of the negative type, i.e. characterised by the ability to generate a clamping force under conditions of inactivity or absence of power supply to the actuation means. This entails several advantages, especially in terms of safety and operational reliability, since the clutch and brake are activated automatically in the absence of energy, for example when the power supply is cut off, thus guaranteeing an immediate and safe response in emergency or fault situations. In fact, when the brake and clutch are activated at the same time, the first planetary gear stops, keeping the load in place and preventing unwanted movements of the winch.

In addition, the simplicity of the intrinsic safety mechanism facilitates its integration into the transmission, improving the protection and overall life of the system.

In addition, the ability of the clutch and brake to maintain a blocked state without energy consumption reduces the operational costs and increases the efficiency of the system.

Preferably, the clutch and the brake comprise a clutch flange which is fixedly joined to the first sun shaft and a braking flange which is fixedly joined to the first ring, respectively. Preferably the resilient means are configured to press the clutch disk against the clutch flange and the braking disk against the braking flange. Preferably the actuation means are configured to, when activated, selectively move the clutch disk or the braking disk away from the respective flange counter to the urging of the resilient means. The configuration described makes it possible to create a compact and stress-resistant system, even under high load conditions.

Preferably the resilient means comprise springs which are interposed between the disks and respective walls of the casing so as to axially urge the disks away from the respective walls of the casing. Preferably the actuation means comprise electromagnets. Preferably the electromagnets are fixed to the respective walls of the casing. Preferably the electromagnets are configured to, when powered, selectively attract the clutch disk or the braking disk towards the respective wall of the casing counter to the urging of the springs. These features make it possible to obtain a high control precision, a rapid dynamic response and minimum encumbrance. In particular, the electromagnetic actuation allows a quick and precise actuation, eliminating the traditional mechanical delays, while the configuration with negative springs guarantees an intrinsically safe and reliable braking or disconnection action, with a minimum energy consumption during the maintenance of the rest state and a high switching efficiency.

As an alternative to the negative type configuration described above, the clutch and brake may have a positive type configuration. In other words, the resilient means (e.g. springs) can be configured to urge the disks into the respective disconnection position. Accordingly, the actuation means (e.g. electromagnets) may be configured to, when activated, selectively move the clutch disk or the braking disk into the respective connection position counter to the urging of the resilient means.

In greater detail, the resilient means can be configured to urge the clutch disk away from the clutch flange and the braking disk away from the braking flange. Accordingly, the actuation means may be configured to, when activated, selectively press the clutch disk or the braking disk against the respective flange counter to the urging of the resilient means.

The positive configuration offers the advantage of consuming less electrical energy when the clutch/brake has to remain disengaged/released for long periods, thus reducing the operational costs and heating of the system. However, the negative type configuration is preferable from a safety point of view since in the event of a power supply interruption, fault or emergency, the system automatically moves to the safe position (brake engaged and clutch engaged) thanks to the action of the resilient means, preventing unwanted movements.

Preferably, the clutch disk is connected to the first ring by means of a first connection with a grooved profile. Preferably the braking disk is connected to the casing by means of a second connection with a grooved profile. Preferably, the aforesaid connections with grooved profiles extend parallel with the central rotation axis and are configured to allow an axial translational movement of the respective disks keeping the transmission of the movement rotational between the respective connected elements. The use of the connections with grooved profiles allows a very efficient transmission of the rotational movement, while reducing the risk of slippage between components. In addition, the possibility of axial translational movement of the disks allows a better adaptation to the variations in load and temperature, contributing to a longer life of the components and a reduction in wear. Finally, this configuration also offers greater ease of assembly and maintenance, as the modular design of the connections facilitates disk replacement without compromising the integrity of the system.

Preferably the transmission comprises a second planetary gear. Preferably the second planetary gear includes a second sun shaft, a second planet carrier and a second ring. Preferably the second sun shaft is fixedly joined to the first planet carrier. Preferably the second planet carrier is fixedly joined to a base of the winch. Preferably the second ring is fixedly joined to the drum. The double-gear configuration has important technical advantages including: high power transmission efficiency, reduction of the load on the components, high reduction ratio, compactness and space optimization, reduction of the vibrations and noise, precise directional control, and increased operational safety.

Preferably the first sun shaft, the second sun shaft and the drum are coaxial. This geometric configuration allows a significant reduction in the encumbrances and weight of the system. In addition, the coaxial alignment of the shafts greatly simplifies the design and production of the system, reducing the number of components and dimensional tolerances to be respected. The coaxiality of the shafts also contributes to improving the efficiency of the transmission, minimising losses due to frictions and misalignments.

Preferably the winch system comprises a motor, in particular an electric motor or, alternatively, a hydraulic motor. Preferably the motor is connected to the first sun shaft to drive it in rotation. The motor allows a precise control of the rotation speed, adapting to the specific needs of the manoeuvre, and can be integrated with electronic management systems to automate some operations, such as in particular the control of the clutch and/or brake. This improves safety on board, reducing the risk of errors when using the winch, and optimises the time it takes to adjust the sails.

The electric motor is preferable to the hydraulic motor because it offers greater energy efficiency, reducing the operational costs and minimizing the need for maintenance thanks to the absence of pressurized fluids and associated leaks. In addition, the electric motor can be more easily integrated with electronic management systems to automate clutch and brake control via electromagnets. The characteristics and advantages of the invention will become clearer from the detailed description of preferred embodiments thereof illustrated, by way of non-limiting example, with reference to the appended drawings wherein:

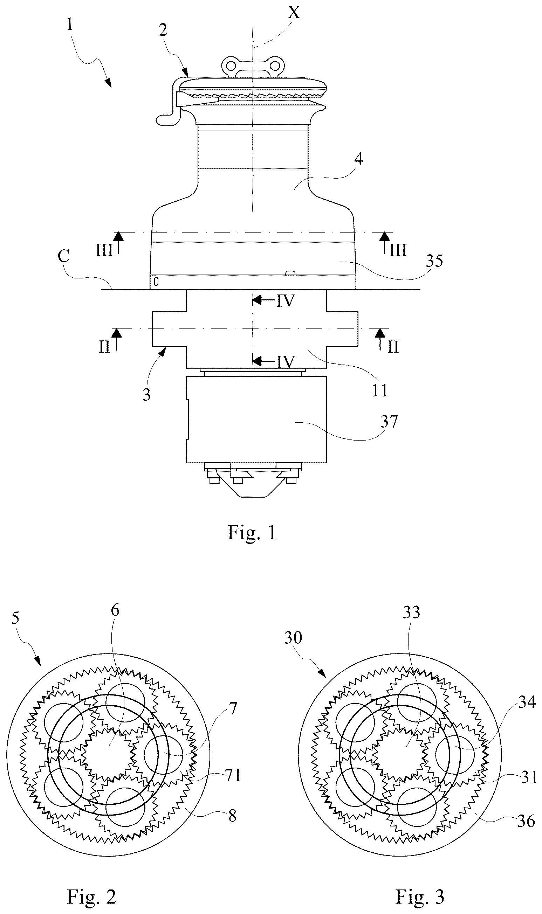

- figure 1 is a side view of a winch system according to the present invention;
- figures 2 and 3 are sectional views respectively according to line II-II and III-III of details of the system of Figure 1;

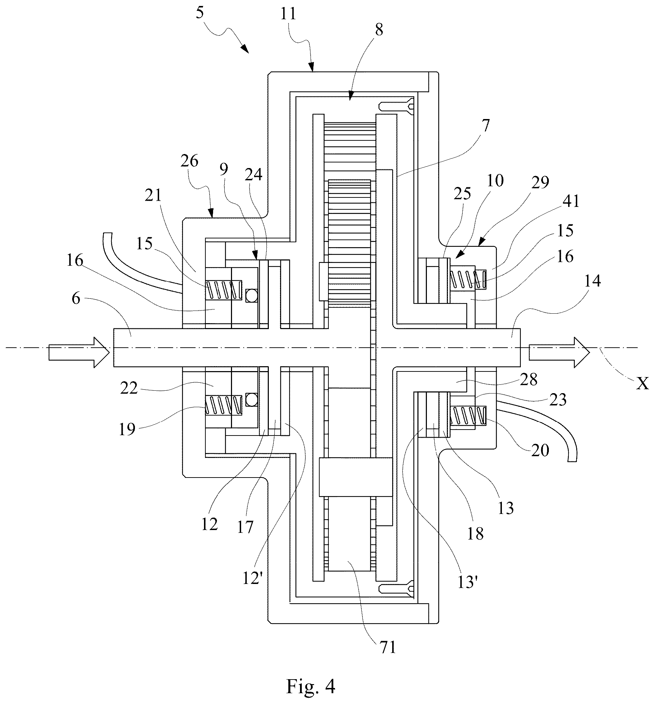

- figure 4 is a sectional view along the line IV-IV of a detail of the system of figure 1;
- figures 5 and 6 are examples of transmission schemes of the winch system according to the present invention.

In the figures, a winch system according to the present invention is indicated as a whole with 1. This system is applied in situations such as hoisting and trimming sails, checking the sheets and tensioning the halyards, and is essential during regattas to quickly manage manoeuvres and optimise performance. In addition, it is useful to facilitate mooring and handling of larger boats, where manual force is not sufficient, and in pleasure boating to improve comfort on board.

The winch system 1 comprises a winch 2 provided with a drum 4 which is rotatable around a central rotation axis X. Preferably the winch 2 is of the reversible type, i.e. the drum 4 can be actuated in both directions of rotation (clockwise and counterclockwise) around the axis X.

It is understood that, in embodiments, the winch 2 may comprise a unidirectional blocking mechanism, or ratchet, which is kinematically connected to the drum 4 and configured to allow the rotation of the drum 4 in a first angular direction while preventing the rotation in the second opposite angular direction. This solution allows tension to be maintained on the ropes without the risk of unwanted loosening, especially under load. Preferably, the blocking mechanism comprises a stop member which is movable between a rest position, in which the drum 4 is free to rotate in both angular directions, and a working position in which the stop member cooperates with a plurality of projections which are fixedly joined to the drum 4, a resilient element for keeping the stop member in the selected position, and a control member for moving the stop member between said positions.

In embodiments, the drum 4 is a cylinder, usually made of metal or composite materials, around which a rope or a sheet is wound in order to increase its tension. The drum 4 may have a knurled or grooved surface to improve the grip of the rope and may be provided with multiple rotation speeds, allowing the load to be adjusted with precision and ease.

In embodiments, the winch 2 further comprises a support base 35 for the drum 4. Preferably the base 35 is configured to be fixed to the deck C of a vessel and may for this purpose comprise fixing means to the deck C.

The winch system 1 further comprises a transmission 3 for the rotational actuation of the drum 4 and, in embodiments, a motor 37 for the rotational actuation of the transmission.

Preferably the transmission 3 is interposed between the motor 37 and the drum 4 of the winch. In embodiments, the transmission 3 is at least partially integrated into the winch 4.

The transmission 3 comprises at least a first planetary gear 5 and preferably also a second planetary gear 30. In a more preferred example the transmission 3 is of the two-stage planetary type consisting of the two gears 5, 30.

In embodiments, the transmission 3 further comprises a casing 11 inside which the first gear 5 and possibly also the second gear 30 can be housed. Preferably the casing 11 is fixedly joined to the base 35 of the winch. In embodiments the casing 11 comprises fixing means to the base 35 of the winch and/or to the deck C of the vessel. The casing 11 can be housed at least partially inside the base 35 and/or the drum 4 of the winch.

Preferably the gears 5, 30 are coaxial with respect to the central rotation axis X of the drum.

In greater detail, the first gear 3 comprises a first sun shaft 6, which can be driven in rotation by the motor 37, a first planet carrier 7, which can be connected to the second gear 30, and a first ring 8, which can be connected to the casing 11. Preferably the first sun shaft 6 meshes with the planets 71 of the first planet carrier 7, which in turn mesh with the first ring 8. Preferably the first sun shaft 6 and the central shaft 14 of the first planet carrier are coaxial with respect to the central rotation axis X.

The second gear 30 may comprise a second sun shaft 33, which may coincide with the central shaft 14 of the first planet carrier, a second planet carrier 34, which may be connected to the base 35 of the winch, and a second ring 36, which may be connected to the drum 4 of the winch. Preferably the second sun shaft 33 meshes with the planets 31 of the second planet carrier 34, which in turn mesh with the second ring 36. Preferably the second sun shaft 33 and the second ring 36 are coaxial with respect to the central rotation axis X.

Preferably the drum 4 is rigidly connected to the second ring 36.

The configuration described allows the motor 37 to actuate the drum 4 through the gear train 5, 30.

The motor 37 is preferably of an electric type, for example brushless direct current, or alternatively hydraulic, and is also preferably coaxial with respect to the axis X.

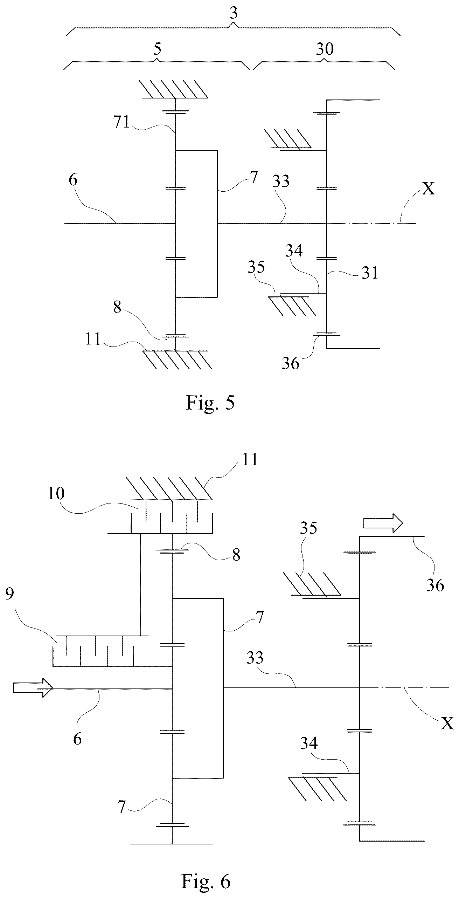

As shown in the example of Figure 5, the first ring 8 may be rigidly connected to the casing 11 of the transmission and/or the base 35 of the winch. Alternatively, as shown in the example of Figure 6, a mechanism may be provided for selectively connecting and disconnecting the first ring 8 with respect to the first sun shaft 6 and/or the casing 11.

It is in fact preferred that at least one of the gears, in particular the first gear 5, is able to be switched between two selectable transmission ratios, via which the rotation of the first sun shaft 6 can be transferred to the drum 4 as a function of the transmission ratio selected.

Preferably the transmission 3 comprises a clutch 9 which is configured to connect the first sun shaft 6 to the first ring 8 and a brake 10 which is configured to connect the first ring 8 to the casing 11. In embodiments, the gears of the first gear 5 are axially comprised between the clutch 12 and the brake 13.

Advantageously, the two transmission ratios are selectable as a function of the activation of the clutch 9 or the brake 10 and a resultant connection of the first ring 8 to the first sun shaft 6 or the casing 11, respectively.

According to a further advantageous aspect, the clutch 9 and the brake 10 can be activated simultaneously, with the effect of stopping the rotation of the drum 4.

In embodiments the clutch 9 comprises a clutch disk 12 which is mounted axially around the first sun shaft 6.

Similarly, in embodiments, the brake 10 comprises a braking disk 13 which is mounted axially around a central shaft 14 of the first planet carrier.

The disks 12, 13 are preferably made of heat and stress resistant material (e.g. metallic material such as cast iron or steel), and are preferably coated with friction material to bring about a friction coupling when pressed against the first ring 8.

Preferably the disks 12, 13 lie on respective planes which are spaced apart substantially perpendicular to the axis X. In embodiments the gears of the first gear 5 are in a position axially comprised between the two disks 12, 13.

In embodiments, the clutch disk 12 is axially movable between a connection position and a disconnection position of the first sun shaft 6 with respect to the first ring 8. When the clutch disk 12 is in the connection position, the clutch 9 is engaged, i.e. the first sun shaft 6 is connected to the first ring 8.

Similarly, in embodiments, the braking disk 13 is axially movable between a connection position and a disconnection position of the first ring 8 with respect to the casing 11. When the braking disk 13 is in the connection position, the brake 10 is engaged, i.e. the first ring 8 is connected to the casing 11.

Preferably, the clutch 9 and the brake 10 comprise resilient means 15 which are configured to urge the disks 12, 13 into the respective connection position, and actuation means 16 which are configured to, when activated, selectively move the clutch disk 12 or the braking disk 13 into the respective disconnection position counter to the urging of the resilient means 15.

In embodiments, the clutch 9 and the brake 10 comprise a clutch flange 17 which is fixedly joined to the first sun shaft 6 and a braking flange 18 which is fixedly joined to the first ring 8, respectively.

In particular, the first ring 8 may comprise a bushing 28 extending axially around the central shaft 14 of the first planet carrier, and the braking flange 18 may be rigidly fixed to the bushing 28. The braking disk 13, on the other hand, can be axially fitted on the bushing 28 with the possibility of rotation and axial translational movement with respect to the bushing.

The flanges 17, 18 are preferably made of heat and stress resistant material (e.g. metallic material such as cast iron or steel), and are preferably coated with friction material to bring about a friction coupling with the respective disks 12, 13 when the latter are in the connection position.

Preferably the flanges 17, 18 lie on respective planes which are spaced apart and substantially perpendicular to the axis X. In embodiments the clutch flange 17 is in a position axially comprised between the clutch disk 12 and the gears of the first gear 5, while the braking flange 18 is in a position axially comprised between the gears of the first gear 5 and the braking disk 13.

It is preferred that the resilient means 15 are configured to press the clutch disk 12 against the clutch flange 17 and the braking disk 13 against the braking flange 18. In this way an intrinsic safety mechanism is obtained whereby the clutch 9 and the brake 10 are normally in a position of blocking the rotation of the drum 4.

It is further preferred that the actuation means 16 are configured to, when activated, selectively move the clutch disk 12 or the braking disk 13 away from the respective flange 17, 18 counter to the urging of the resilient means 15.

In embodiments, the casing 11 has a first and a second wall 21, 41 that are opposite and preferably transverse to the axis X, between which the clutch 12 and the brake 13 as well as the gears of the first gear 5 are axially comprised. It is preferred that the resilient means 15 are of the spring type. It is further preferred that the actuation means 16 are of the electromagnet type.

In greater detail, the resilient means 15 comprise first springs 19 which are interposed between the clutch disk 12 and the first wall 21 of the casing, and second springs 20 which are interposed between the braking disk 13 and the second wall 41 of the casing, so as to urge the disks 12, 13 axially away from the respective walls 21, 41 of the casing.

In embodiments the actuation means 16 comprise at least a first electromagnet 22 which is fixed to the first wall 21 of the casing and a second electromagnet 23 which is fixed to the second wall 41 of the casing. Advantageously the electromagnets 22, 23 are configured to, when powered, selectively attract the clutch disk 12 or the braking disk 13 away from the respective connection position and preferably towards the respective wall 21, 41 of the casing counter to the urging of the springs 19, 20.

In embodiments, the clutch disk 12 has, on its outer perimeter, a first grooved profile 24 which is connected to a corresponding grooved profile of the first ring 8.

Similarly, in embodiments, the braking disk 13 has, on its outer perimeter, a second grooved profile 25 which is connected to a corresponding grooved profile of the casing 11.

Advantageously, the grooved profiles 24, 25 extend parallel with the central rotation axis X and are configured to allow the axial sliding of the respective disks 12, 13 keeping the transmission of the movement rotational between the respective connected elements.

In embodiments the first ring 8 may comprise a first cup portion 26 extending axially around the clutch disk 12 and comprising, on its inner perimeter, a grooved profile connected to the first grooved profile 24 of the clutch disk. Similarly, in embodiments, the casing **11** may comprise a second cup portion 29 extending axially around the braking disk 13 and comprising, on its inner perimeter, a grooved profile connected to the second grooved profile 25 of the braking disk.

Preferably the clutch 12 further comprises a second clutch disk 12' which is axially interposed between the clutch flange 17 and the first ring 8. Advantageously, the second clutch disk 12' cooperates with the clutch disk 12 so as to exert a clamping action on the clutch flange 17 due to the urge of the springs 19 when the clutch 12 is engaged.

Similarly, the brake 13 may comprise a second braking disk 13' which is axially interposed between the first ring 8 and the braking flange 18. Advantageously, the second braking disk 13' cooperates with the braking disk 13 so as to exert a clamping action on the braking flange 18 due to the urge of the springs 20 when the brake 13 is engaged.

Advantageously, at least three possible operating conditions of the winch system 1 as a function of the activation of the clutch 12 and/or the brake 13 are provided.

In particular, when the first electromagnet 22 and not the second electromagnet 23 is powered, the clutch 12 is disengaged and the brake 13 is engaged. In these conditions, the first gear 5 transmits the rotation from the first sun shaft 6 to the first planet carrier 7 with a first transmission ratio, in particular a reduction ratio. In this way it is possible to actuate the drum 4 in low mode.

When the second electromagnet 23 and not the first electromagnet 22 is powered, the clutch 12 is engaged and the brake 13 is disengaged. Under these conditions the first gear 5 transmits the rotation from the first sun shaft 6 to the first planet carrier 7 with a second transmission ratio, in particular a direct 1:1 ratio. In this way it is possible to actuate the drum 4 at a higher speed.

The change between the two transmission ratios, both towards the higher ratio and towards the lower ratio, can take place under load without interrupting the use of the winch thanks to the friction coupling between the disks 12, 13 and the respective flanges 17, 18.

When neither the first nor the second electromagnet 22, 23 are powered, the clutch 12 and the brake 13 are both active (clutch 12 engaged and brake 13 engaged). In these conditions the first gear 5 is blocked and it is therefore possible to immobilize the drum 4 of the winch, further improving the versatility of the system and operational safety.

The invention thus solves the proposed problem by achieving numerous advantages, including more efficient power transmission, a longer life of the components, better compactness and a safer and more effective operational control, all of which are particularly useful in marine applications where space and reliability are crucial.

## Claims

1. A winch system (1) for sailing vessels, comprising a winch (2) and a transmission (3) for actuating a drum (4) of the winch, wherein the transmission comprises at least a first planetary gear (5) including a first sun shaft (6), a first planet carrier (7) and a first ring (8), the first planetary gear (5) being able to be switched between two selectable transmission ratios, via which a rotation of the first sun shaft (6) can be transferred to the drum (4) as a function of the transmission ratio selected, **characterized in that** the transmission (3) comprises a clutch (9) which is configured to connect the first sun shaft (6) to the first ring (8) and a brake (10) which is configured to connect the first ring (8) to a casing (11) of the transmission, the two transmission ratios being selectable as a function of the activation of the clutch (9) or the brake (10) and a resultant connection of the first ring (8) to the first sun shaft (6) or the casing (11), respectively.

2. The winch system (1) according to claim 1, wherein the clutch (9) is configured to, when activated, bring about a friction coupling between the first sun shaft (6) and the first ring (8), the brake (10) being configured to, when activated, bring about a friction coupling between the first ring (8) and the casing (11).

3. The winch system (1) according to claim 1 or 2, wherein the clutch (9) and the brake (10) can be activated simultaneously in order to stop the rotation of the drum (4).

4. The winch system (1) according to one or more of the preceding claims, wherein the first planetary gear (5) has a central rotation axis (X), the clutch (9) comprises a clutch disk (12) which is mounted axially around the first sun shaft (6) and the brake (10) comprises a braking disk (13) which is mounted axially around a central shaft (14) of the first planet carrier, the clutch disk (12) being axially movable between a connection position and a disconnection position of the first sun shaft (6) with respect to the first ring (8), the braking disk (13) being movable axially between a connection position and a disconnection position of the first ring (8) with respect to the casing (11).

5. The winch system (1) according to claim 4, wherein the clutch (9) and the brake (10) comprise resilient means (15) which are configured to urge the disks (12, 13) into the respective connection position and actuation means (16) which are configured to, when activated, selectively move the clutch disk (12) or the braking disk (13) into the respective disconnection position counter to the urging of the resilient means (15).

6. The winch system (1) according to claim 5, wherein the clutch (9) and the brake (10) comprise a clutch flange (17) which is fixedly joined to the first sun shaft (6) and a braking flange (18) which is fixedly joined to the first ring (8), respectively, the resilient means (15) being configured to press the clutch disk (12) against the clutch flange (17) and the braking disk (13) against the braking flange (18), the actuation means (16) being configured to, when activated, move the clutch disk (12) or the braking disk (13) selectively away from the respective flange (17, 18) counter to the urging of the resilient means (15).

7. The winch system (1) according to claim 5 or 6, wherein the resilient means (15) comprise springs (19, 20) which are interposed between the disks (12, 13) and respective walls (21, 41) of the casing so as to axially urge the disks away from the respective walls of the casing, and wherein the actuation means (16) comprise electromagnets (22, 23) which are fixed to the respective walls (21, 41) of the casing and which are configured to, when powered, selectively attract the clutch disk (12) or the braking disk (13) towards the respective wall (21, 41) of the casing counter to the urging of the springs (19, 20).

8. The winch system (1) according to claim 4, wherein the clutch (9) and the brake (10) comprise resilient means (15) which are configured to urge the disks (12, 13) into the respective disconnection position and actuation means (16) which are configured to, when activated, selectively move the clutch disk (12) or the braking disk (13) into the respective connection position counter to the urging of the resilient means (15).

9. The winch system (1) according to claim 8, wherein the clutch (9) and the brake (10) comprise a clutch flange (17) which is fixedly joined to the first sun shaft (6) and a braking flange (18) which is fixedly joined to the first ring (8), respectively, the resilient means (15) being configured to urge the clutch disk (12) away from the clutch flange (17) and the braking disk (13) away from the braking flange (18), the actuation means (16) being configured to, when activated, selectively press the clutch disk (12) or the braking disk (13) against the respective flange (17, 18) counter to the urging of the resilient means (15).

10. The winch system (1) according to one or more of claims 4 to 9, wherein the clutch disk (12) is connected to the first ring (8) by means of a first connection (24) with a grooved profile, and the braking disk (13) is connected to the casing (11) by means of a second connection (25) with a grooved profile, the connections (24, 25) with grooved profiles extending parallel with the central rotation axis (X) and being configured to allow an axial translational movement of the respective disks (12, 13), keeping the transmission of the movement rotational between the respective connected elements.

11. The winch system (1) according to one or more of the preceding claims, wherein the transmission (3) comprises a second planetary gear (30) including a second sun shaft (33) which is fixedly joined to the first planet carrier (7), a second planet carrier (34) which is fixedly joined to a base (35) of the winch, and a second ring (36) which is fixedly joined to the drum (4).

12. The winch system (1) according to claim 11, wherein the first sun shaft (6), the second sun shaft (33) and the drum (4) are coaxial.
